Europäisches Patentamt

European Patent Office

Office européen des brevets

(11) Publication number: 0 374 593
A1

## (12) EUROPEAN PATENT APPLICATION

(21) Application number: 89122532.8

(51) Int. Cl.5: C03C 25/02, C08J 5/08

(22) Date of filing: 06.12.89

(30) Priority: 12.12.88 US 283091

(43) Date of publication of application:
27.06.90 Bulletin 90/26

(84) Designated Contracting States:
BE CH DE ES FR GB IT LI NL

(71) Applicant: PPG INDUSTRIES, INC.
One PPG Place
Pittsburgh Pennsylvania 15272(US)

(72) Inventor: Watkins, Johnson Clifford
4205 Haddon Place
Wexford Pennsylvania 15909(US)
Inventor: Swisher, Robert Gregory
172 Gordon Street
Pittsburgh Pennsylvania 15218(US)

(74) Representative: Sternagel, Hans-Günther, Dr.
et al
Patentanwälte Dr. Michael Hann Dr. H.-G.
Sternagel Sander Aue 30
D-5060 Bergisch Gladbach 2(DE)

(54) Chemically treated inorganic oxide fibers with thermal stability suitable for high temperature polymers.

(57) Chemically treated inorganic oxide substrates of the present invention have good adhesion to polymeric materials with high process temperatures or good thermal resistance. The chemical treatment exists on the substrate as a volatile-reduced residue of a treatment comprised of at least one film forming polymer that is essentially free of polyvinylacetate homopolymer and polyacrylic homopolymers and copolymers, at least one fiber lubricant, an organofunctional silane coupling agent present in an amount up to around an effective coupling agent amount, at least one organo alkoxide of a metal selected from the group comprising titanium and zirconium and a carrier for application of the chemical treatment to the substrate. The amount of the film forming polymer and lubricant are effective film forming and lubricating amounts, respectively. The amount of the organo alkoxide of the metal is an amount in the range of greater than 10 parts per 100 parts of the film forming polymer and up to at least an effective coupling agent amount. For instance. the chemical treating composition can be an aqueous composition applied to glass fibers. In this instance the film forming polymer is selected from epoxy polymers. polyurethane polymers and mixtures thereof as separate polymers or as copolymers where the total amount is an effective film forming amount. The fiber lubricant is a nonionic fiber lubricant of a polyoxyalkylene including polyethylene oxide and polypropylene oxide copolymers where the amount of the polypropylene oxide moiety is less than around 80 weight percent of the copolymer. With the specified combination of film forming materials the organo alkoxide of the metal like alkanolamine titanates or zirconates is present in an amount up to and including an effective coupling agent amount. Also, there may be present at least one organofunctional silane coupling agent like an aminosilane coupling agent or glycidoxy or ureido functional silane coupling agents. When both the silane and the organo alkoxide of the metal are present, the total amount in the aqueous composition can comprise an effective coupling agent amount wherein the ratio of one to the other is in the range of around 1 to 6 to 6 to 1. These chemically treated glass fibers find particular suitability in reinforcing high temperature processed polymers and thermal resistant polymers such as polyphenylenesulfide, polyethylene imide and polyethersulfone and the like.

# CHEMICALLY TREATED INORGANIC OXIDE FIBERS WITH THERMAL STABILITY SUITABLE FOR HIGH TEMPERATURE POLYMERS

The present invention is directed to chemically treated or "sized" fibers of organic oxides such as silica, alumina, calcium oxide, magnesium oxide and the like, for instance, those present in glass fibers and ceramic fibers. These sized fibers can display good thermal properties for use as reinforcement and fillers for numerous matrix polymer and especially for the high temperature stable or high temperature processable matrix polymers.

Fiber reinforced plastics (FRP) have utilized inorganic oxide fibers like glass fibers to reinforce thermosetting and thermoplastic polymers for the ultimate production of various molded products. Typically the production of glass fiber reinforcement involves chemically treating the glass fibers with a sizing composition to increase the oleophilic character of the glass fibers and to protect the glass fibers from external abrasion and intrafilament abrasion during formation and processing. Developments in the area of matrix polymers for the FRP industry resulted in polymers designed for use at higher temperatures to expand the utilization of FRP products. For instance, matrix polymers such as polyethersulfone (PES), polyphenylene sulfide (PPS), polyaromatic ketones like polyetheretherketone (PEEK) and polyetherketone (PEK) and polyetherketone-ketone (PEKK) and polyketone (PAEK) and amorphous, aromatic polyesters (polyarylates) are just a few examples of matrix polymers developed or in the development stage having good heat or temperature resistance. The glass and ceramic fibers by themselves have good heat or temperature resistance so that in a composite of FRP a weak link in the armor of thermal resistance may be the chemical treatment or sizing on the fibers.

The sizing composition typically includes one or more film forming polymers, a coupling agent like an organofunctional silane coupling agent, a fiber lubricant, possibly emulsifiers for the film forming polymer, and perhaps wetting agents, all of which are usually present in an aqueous solution for application to the fibers.

It is an object of the present invention to provide chemically treated (sized) inorganic oxide substrates such as fibers like glass fibers having improved thermal temperature resistance for use in the high temperature processed or high temperature resistant polymeric matrices, although the sized fibers can also be used in other polymeric matrices.

The object of the invention is attained by inorganic oxide substrates having thereon the residue of an aqueous chemical treating composition: comprising: a. at least one film forming polymer that is essentially free of polyvinylacetate homopolymer and polyacrylic homopolymers and copolymers and present in an effective film forming amount, b. at least one fiber lubricant in an effective lubricating amount, c. organofunctional silane coupling agent present in an amount ranging from 0 to an effective coupling agent amount, wherein the amount is zero when the film forming polymer is selected from an epoxy polyurethane copolymer and two film forming polymers, where one is an epoxycontaining polymer and the other is a polyurethane and they are present in a ratio in the range of 6:1 to 1:6, d. organo alkoxide of a metal selected from the group comprising titanium and zirconium, wherein the salt is present in a range of amounts from greater than 10 parts per 100 parts of the film-forming polymer up to at least an effective coupling agent amount; and e. a carrier for application of the chemical treatment to the substrate present in an effective application amount.

Preferably, the organofunctional silane coupling agent is present and the ratio of amounts of the organo alkoxide of the metal and the organofunctional silane is in the range of 6:1 to 1:6.

Preferably the ratio of the organoalkoxide of metal to the organofunctional silane coupling agent ranges from 2:1 to 1:2.

Another aspect of the present invention is where the chemically treated inorganic oxide substrates are fibers having a volatile reduced residue of an aqueous size composition. At least one film forming polymer is present that is a polyurethane film forming polymer, and also present are: the fiber lubricant that is essentially free of large amounts of propylene oxide moieties. Also, the ratio of the organofunctional silane coupling agent, when present, to the organo alkoxide of titanium and/or zirconium is in the range of 6:1 to 1:6, and the carrier is water. Optionally an additional film forming polymer can be present such as an epoxy film forming polymer generally to give a ratio of the amounts of the epoxy to polyurethane film forming polymers of 10:1 to 1:10. When this combination of film forming polymers is present, the organofunctional silane coupling agent need not be present, and the amount of the organo alkoxide of titanium and/or zirconium is present in an effective coupling agent amount. Otherwise than with this combination of film forming polymers, the organofunctional silane is generally present.

The chemically treated (sized) inorganic oxide fibers and especially glass fibers of the present invention

2

find suitability in reinforcing polymeric matrices and especially the higher melting polymers or more thermally resistant polymers. Nonexclusive examples of these include: (PPS), (PPS), (PEI), polyarylates, (PES), (PEEK), (PAEK), (PEK), (PEKK), and the like. Other matrix polymers like poly(butylene terephthalate) polyamides may be reinforced with the sized fibers of the present invention.

## Detailed Description of the Invention

The film forming polymer utilized in the chemical treating composition in the present invention is any film forming polymer that is essentially free of unmodified polyvinylacetate homopolymer and polyacrylates and that forms a film upon evaporation of volatiles or upon curing by the addition of a curing agent. For instance, the removal of the volatiles or the curing can occur when the treated fibers or substrates are heated. The film that is formed need not be a vertically self-supported film, but it should at least be a discontinuous coating of a perceivable thickness. The film forming polymer can be a liquid or an emulsion, suspension or dispersion of the polymer in a carrier compatible liquid. For instance, the emulsion can be an oil-in-water type emulsion where, when the water and any other volatiles are removed, the film of the polymer is formed. Nonexclusive examples of the film forming polymer include: polyurethane polymers, epoxy polymers, epoxy-polyurethane copolymers, polyester polymers, bisphenol A thermoplastic polyesters, polyvinylpyrrolidone, and the like. Suitable epoxy polymers present in the form of an oil-in-water dispersion or emulsion, hereinafter referred to as an emulsion, include those discussed in U.S. Patent No. 4,615,946 (Temple), One such epoxy polymer emulsion is that available from Interez, Inc., under the trade designation "EPI-REZ CMD 35201" material. This epoxy resin has an epoxy resin dispersion which has 60 percent nonvolatiles and the only volatile material is water and the dispersion has a weight per epoxide of approximately 530, a pH of 8.3, and an average particle size between 1 and 4$\mu$m . The most suitable epoxy resin is the epoxy resin dispersion available from Interez, Inc., under the trade designation CMD-W-60 5520 which has a percent solids of
60 ± 2 and a viscosity LVT No. 4 at 30 rpm of 10 000 mPaxs ± 2 000 (10.000 cps ± 2,000) at 25°C.
Another suitable film forming polymer that can be used is one or more polyurethane polymers. By the use of the term polyurethane, it is meant to include reaction products of organic compounds having at least two active hydrogens and di and/or polyisocyanates, wherein the resulting polymer is a curable polyurethane or polyurethane urea type polymer through removal of volatiles or curing by a curing agent. For instance, the organic compounds with at least two active hydrogens is a polyol such as a polyester polyol or polyether polyol and most preferably, a polyol which is linear. Examples of polyester-based polyurethane elastomers include those where the polyester is prepared from carboxylic acid such as adipic and the glycol portion can be selected from such materials as ethylene glycol, 1,3-propylene glycol, 1,3-butylene glycol and 1,4-butylene glycol. Further examples of polyfunctional polyesters which can be used are those based on phthalic anhydride, adipic acid, ethylene glycol, trimethylol propane, and the like. A slight amount of branching of the polyol can be tolerated but the degree of functionality or branching of the polyol should be kept to a minimum since increased branching results in films that are tougher, harder and less flexible. The di or polyisocyanates generally used to form the polyurethane are selected from aromatic, aliphatic and mixtures thereof, isocyanates but the aliphatic isocyanates are preferred. Examples of the polyisocyanates that can be used include: the aromatic isocyanate of toluene diisocyanate and the aliphatic isocyanates such as hexamethylene diisocyanate, methylcyclohexylene diisocyanate, dicyclohexyl methane diisocyanate, lysine diisocyanate where the aromatic group is methyl or ethyl, bis(2-isocyanato ethyl) fumaric, bis(2-isocyanato ethyl) carbonate and dimeryl diisocyanate, where the organic group is essentially a $C_{36}$ hydrocarbon radical. Another isocyanate that may be used is 4,4'-diphenyl methane diisocyanate. The polyurethane polymer can be made as an uncurable or as a curable material by any method known to those skilled in the art, for instance, additional monomers like diisocyanate, polyols or epoxies can be added to the polymer and/or a curable moiety can be introduced into the polymer. The polyurethane polymers can be produced by any one-shot or single step method known to those skilled in the art or by the two step chain extension process utilizing linear or lightly branched polyols with the necessary molar portions of a diisocyanate known to those skilled in the art to produce a water dispersible polyurethane.
Specific nonexclusive examples of commercially available polyurethane polymers in an oil-in-water emulsion that can be used include a blend of polyester based polyurethane dispersions such as Witcobond®W-290-H, available from Witco Chemical Corporation and XW-110 dispersion available from Mobay Chemical Corporation. The XW-110 material is a fully reacted polyurethane dispersed in water/N-methyl-2-pyrrolidone and contains little or no free isocyanates. The dispersion has a hazy off-white

3

EP 0 374 593 A1

appearance with a 35 percent solids level and a density of 0.96 g/cm$^3$ (8.7 lb/gal). The viscosity at 25°C (77°F) in mPa x s is 130, and the surface tension is 41 x 10$^{-5}$ N/cm (41 dynes/cm). The film properties include: clear appearance, 4550 x 10$^4$ Pa (6,600 psi) tensile strength, 170% elongation at break, 3585 x 10$^4$ Pa (5200 psi) modulus at 100% elongation and 3930 x 10$^4$ Pa (5700 psi) yield modulus. The Witcobond® W-290-H polyurethane has a milky white appearance, is aliphatic in type with a 65 percent solids level with an anionic charge and with a particle size of around 2 micrometers and with a pH at 25°C (77°F) of 7.5 and with a viscosity as measured by Brookfield LVF in mPa x s of 200 and with a surface tension of 42 x 10$^{-5}$ N/cm (42 dynes/cm). The film properties of the 290H material are: 3102 x 10$^{-4}$ Pa (4500 psi) tensile strength, 720 percent elongation and moduli of 172 x 10$^4$ Pa (250 psi) at 100%, 372 x 10$^{-4}$ Pa (540 psi) at 300% and 1069 x 10$^4$ Pa (1550 psi) at 500%.

In addition a combination of film forming polymers may be used in the form of a combination of two distinct emulsions, suspensions or dispersions or solutions or as a mixture of these or as copolymers of the functional moieties such as epoxy polyurethane copolymers. For instance, when the treated substrates are reinforcement for PPS, PEI, polyamides and polybutylene terephthalate, the polyurethane polymer can be the sole film forming polymer in the size composition. Also, other film forming polymers may be present to give further enhanced properties, but the polyurethane is sufficient to provide a thermally stable, sized reinforcement. A suitable combination of the film forming polymers is a polyester urethane polymer used in conjunction with an epoxy-containing film forming polymer or their emulsions, dispersions, suspensions or solutions. When the emulsions of both of these film forming polymers are used, it has been found that a suitable ratio of the two to yield an effective film forming amount of total film forming polymer is 4:1 to 1:1 of the epoxy containing polymer to the polyurethane polymer. Additional amounts of the epoxy polymer may reduce some handling characteristics of chopped sized glass fibers. Specifically the filamentation resistance may be decreased, while additional amounts of polyurethane polymer may result in less thermal resistance of a reinforced composite. Generally the amount of the film forming polymer is an effective film forming amount. This amount results in the film residue upon evaporation of the volatiles or curing of the curing agent with film forming polymer. The effective film forming amount generally ranges from 1 to 25 weight percent of the total size including the carrier, although higher amounts are possible for higher solids applications. For instance, when an oil-in-water emulsion with a film forming polymer is present in an aqueous size, the amount of the emulsion on a solids basis is 5 to 15 weight percent of the solids of the aqueous chemical treating composition. Generally, the percent solids of the oil-in-water film forming emulsion is in the range of 10 to 80 weight percent of the emulsion.

Additionally, the chemical treating composition has at least one lubricant selected from cationic fiber lubricants, nonionic fiber lubricants and polyoxyalkylene homopolymers and copolymers. With the polyoxyalkylene lubricants any amount of the propylene oxide moiety is less than around 80 weight percent of the copolymer to assure water solubility for aqueous based sizes. Nonexclusive examples of cationic lubricants include: oxyalkylated amines, alkyltrialkyl quaternary ammonium salts, alkyl imidazoline derivatives, pelargonic tetraalkylene pentamine derivatives, fatty amides including fatty primary amides, fatty secondary amides, methylene and ethylene bisamides and alkanolamides. Suitable examples of nonionic lubricants include fatty acids, esters such as fatty esters, wax esters, glycerol esters, glycol esters, fatty alcohol esters and those described as complex esters, fatty alcohols, paraffinic and microcrystalline waxes, polyethylenes, oxidized polyethylenes, and the like. The amount of the lubricant employed in the chemical treating composition in the present invention is an effective lubricating amount which is generally in the range of 0.1 to 5 weight percent of the total size or 1 to 20 weight percent of the nonaqueous components of the size. The most suitable lubricant is a polyoxyalkylene copolymer which is a block copolymer with a majority of ethylene oxide moiety to the propylene oxide moiety. Nonexclusive examples of these lubricants are those having viscosities ranging from 400 to 100,000 mm$^2$ s (centistokes), for instance, the polyoxyalkylene copolymer available from Union Carbide Chemical Corporation under tha trade designation UCON 75-H-90,000, having a viscosity of 90.000 measured in mm$^2$ s (centistokes) is a suitable lubricant.

Also present in most aspects of the chemical treating composition is a reactable organosilane coupling agent having at least one hydrolyzed or hydrolyzable group and having the general formula of $R''\text{-Si-}(OR')_3$ where: $R'$ is hydrogen and/or alkoxy groups having 1 to 5 carbon atoms; and $R''$ is an aminoalkyl, polyaminoalkyl where the alkyl group is from 1 to 6 carbon atoms, alkyl or aryl ester, glycidoxyalkyl, glycidoxyaryl or glycidoxyaraalkyl group or an isocyanato alkyl, isocyanato aryl or isocyanato araalkyl group or ureido, ureidoalkyl and ureidoaraalkyl. Suitable examples of the amino and polyamino organosilanes are found in U.S. Patent 4,728,573, and U.S. Patent 4,394,418.

The amount of the organofunctional silane coupling agent present in the treating composition is an effective coupling agent amount. This amount, when the organosilane is present, generally ranges from 1 to

4

EP 0 374 593 A1

10 weight percent of the solids of the size composition and from 0.1 to 5 weight percent of the aqueous size composition. Use of additional amounts result in further incremental improvements that are insufficient to justify the additional cost.

Also present in the treating composition is an organo functional alkoxide of titanium and/or zirconium where the alkoxide preferably is compatible and active in water. In nonaqueous sizings the alkoxide titanate and/or zirconate can have the general formula: $(RO)_y X-(O-A-R')_z$ I where X is titanium (Ti) or zirconium (Zr), R is hydrogen and/or a lower alkyl group with 1 to 5 carbon atoms, A is an alkylate, carboxyl, sulfonyl, phenolic, phosphate pyrophosphate or phosphite group, and R' is a short or long chain carbon group having amine or methacrylate functionality. The letters "y" and "z" represent integers, where y can range from 1 to 4 and z can range from 1 to 3 and (y + z) ranges from 2 to 6. In aqueous sizings the titanate and/or zirconate are preferably soluble in water without the use of surfactants and the titanate or zirconate is still active in water. By active it is meant that the titanate and zirconate are not fully reacted or do not have too rapid a rate of reaction with water to produce substantial amounts of titanium or zirconium dioxide. In remaining active in water, the titanate and/or zirconate can react with water but at a slow rate of reaction so as not to produce a lot of dioxides and to be still reactive with the inorganic substrate. The amount of the organotitanate and/or organozirconate is an amount greater than 10 parts per 100 parts of the film forming polymer. When one or more of these salts are present without the presence of the organosilane coupling agent, the amount is an effective coupling agent amount. Generally the ratio amounts of the titanate salt to the organosilane on a solids basis is in the range of 6:1 to 1:6. This ratio of amounts is useful when the film forming polymer is a polyurethane and/or epoxy polymer. A particularly useful ratio of the amounts is in the range of 2:1 to 1:2. Nonexclusive examples of the organotitanate includes alkyl amino alkoxide titanates and zirconates, and latec acid ammonium salt derivatives of titanate and/or zirconates and organo salts of oxyacids of titanium and/or zirconium. The alkyl and alkoxide groups can have from 1 to 5 carbon atoms, and the titanate and zirconate can be of the monoalkoxy type, the coordinate type, the chelate type and/or the quat type. With reference to Formula I above these titanates and/or zirconates have y equal to at least 1 and the alkoxide includes partially or fully hydrolyzed derivatives thereof, and z is an integer up to 3 and A and R' are part of one group such as an alkanol where 0 in formula I is from the alcholic or acidic oxygen and A is hydrogen or part of the carboxyl and R' is a lower alkyl group having 1 to 5 carbon atoms. It has been found that with the presence of the organotitanate and/or organozirconate in the amounts greater than those amounts typically used as antistatic agents, these compounds function to enhance promotion of adhesion when used in conjunction with organofunctional silanes. This enhancement is measured by improvement in mechanical properties of fiber reinforced plastic composite like tensile strength notched and unnotched Izods.

Also, there may be present in the size a suitable polyoxyethylene (POE) polymer to improve the wet state strand integrity. Such a polyoxyethylene is available under the trade designation WSR-301 having a molecular weight of around 4 million or more. This POE is present in an amount in the range of 0.05 to 0.6 weight percent of the total solids of the size. Use of higher amounts leads to more viscous treating compositions. The POE can be dispersed or emulsified in water by any method known to those skilled in the art. Also, there may be present a reaction product obtained by reacting an alkoxylated nitrogen containing compound such as an alkoxylated fatty amine or amide with a polycarboxylic acid and then reacting the resultant product with an epoxide compound, as further described in U.S. Patent 3,459,585 (Killmeyer et al).

The amount of this material can range generally from around 1 to about 10 and particularly from 1 to 5 weight percent of the solids of the aqueous treating composition. Other additional film forming polymers, coupling agents and lubricants known to those skilled in the art can be incorporated, but their contribution to performance properties may not be substantial enough to justify the cost of their addition.

Also present in the size is a carrier for application or disposition of the size composition onto inorganic oxide surfaces. Typically the carrier is water although other carriers for compositions of different viscosity such as foams and gels may also be employed. Also, the carrier can be organic solvents wherein most of the size components would be soluble. These organic solvent based sizes would be applied to the inorganic oxide substrate in an environment to minimize the risk of fires. The preferred carrier is water in an amount to produce an aqueous size composition having a proper viscosity and solids level for application of the composition to the inorganic oxide substrate. For inorganic oxide fibers like glass fibers the total solids (nonaqueous components) of the aqueous chemical treating composition is 1 to 30 weight percent and preferably 5 to 15 weight percent. In all events the amounts of the solids in the aqueous size composition for application to fibers should not exceed that amount which will cause the viscosity of the aqueous solution to be greater than about 100 mPa·s (centipoise) at 20°C. Solutions having viscosities greater than this are difficult to apply to the glass fibers during their formation without breaking the fibers. The total

5

solids level may be varied to accommodate different processing speeds and application efficiency. It is preferred that the viscosity of the size be between 1 and 20 mPa•s (centipoise) at 20°C for best results.

Preparation of the size involves adding any of the components either simultaneously or sequentially to each other with a medium degree of agitation. Generally the method of preparing the size can be any method known to those skilled in the art.

The size is applied to inorganic oxide surfaces such as ceramic and glass fibers where the major inorganic oxide component is silica. Inorganic oxide fibers like ceramic fibers may have a substantial amount of aluminum oxide, and/or alkali metal and alkaline earth metal oxides with small amounts of ferric oxide, titanium dioxide and the like. The glass substrates can be any of the glass compositions known to those skilled in the art and particularly the fiberizable glass compositions such as those known as "E-Glass" and "621-Glass" and low or free boron and/or fluorine derivatives thereof.

The application of size to fibers is in such a manner to result in a moisture or volatile-reduced residue of the size in the range of 0.5 to 5 weight percent based on the total weight of the fibers with the sizing composition. The aqueous sizing is applied to the glass fibers during conventional forming processes to produce sized glass fibers at attenuation speeds to accommodate the addition of the proper amount of the size. The size is applied to the glass fibers before they are gathered together to form one or more strands by means of an applicator known in the art to permit contact of the liquid size with the solid fiber such as a roller or belt applicator, partially submerged in the size contained in a reservoir such as the applicator shown in U.S. Patent No. 2,728,972

The fibers are gathered into one or more strands by a gathering shoe and either wound onto a forming package rotating at a sufficient speed to attenuate the fibers or passed to pulling rollers to attenuate the fibers and direct them into a wet chopping unit. Attenuation of the fibers is from the orifices in the bushing of the glass fiber direct melting furnace or marble melting furnace for the addition of the proper amount of the size to the fibers. Other methods of applying the size to the fibers such as pad applicators may be employed. The amount of the volatile reduced residue on the fibers is based on the measurement by the loss on ignition (LOI) method.

Continuous glass fiber strands wound on forming packages in annular layers or wet chop glass fiber strands are typically heated to reduce the volatiles including the moisture content of the size on fibers in the strands by air drying or in any conventional drying ovens known to those skilled in the art. Usually the temperatures are 110°C to 150°C, preferably 115 to 130°C for a time of around 11 hours. Other equivalent temperatures and times may be used to give equivalent heating or drying to remove a substantial amount of the volatiles including moisture from the strands. The moisture content of the heated strands is usually less than around 0.06 weight percent and constitutes the glass fibers with the residue of the size. A plurality of the strands with the size residue can be chopped in a dry chop operation or can be gathered in parallel to form a rope or a roving. The chopped strands or continuous strands or rovings or even woven rovings or mats of chopped strands and continuous strands are useful in preparing polymeric molding compounds. Particularly, these sized strands are useful in reinforcing the high performance polymers having higher processing temperatures and/or melt temperatures to produce RP products capable of use in a wider temperature range including elevated temperatures. A few nonexclusive examples of these high performance polymers were previously listed.

Preferred Embodiment

The size is an aqueous size having two film formers, a nonionic lubricant, amino organo-functional silane coupling agent and triethanolamine zirconate. One film former is an epoxy polymer in an oil-in-water dispersion where the epoxy is a bisphenol A type epoxy with approximately a 500 to 600 equivalent weight. The second film forming polymer is a poly(esterurethane) in an oil-in-water emulsion. The ratio of amounts of the solids of the film formers is in the range of 4 to 1 of the epoxy to the polyurethane. The nonionic fiber lubricant is poly(ethyleneoxide)-propylene oxide copolymer (PEO-PPO) with a low molecular weight and a viscosity of around 90,000 mm²·s (centistokes). The aminosilane is gamma-aminopropyltriethoxysilane or 3-triethoxysilylpropylamine available from Union Carbide Corporation under the trade designation A-1100 silane. The organoalkoxide titanate or zirconate is a triethanolamine zirconate available under the trade designation MPD-2612 Tyzor from DuPont de Nemours and Company. This zirconate results in a sized fiber having good color. In an alternative embodiment where the color of the sized fibrous strand is less important, a triethanolamine titanate is used. The amounts of the components in the size on a solids basis are listed below for the preferred embodiment and in Table 1 at Example 2 for the use of the triethanolamine titanate.

| | lbs/100 Gal. | Solids | Wt % Solids |
|---|---|---|---|
| Epoxy polymer dispersion CMD-3502 | 49.79 | 29.87 | 43.2 |
| Poly(esterurethane) dispersion Baybond XW-110-2 | 21.94 | 7.68 | 11.1 |
| Gamma aminopropyltriethoxysilane (A-1100) | 12.55 | 10.04 | 14.5 |
| PEO-PPO lubricant (Ucon 75-H-90000) | 5.51 | 5.51 | 8.0 |
| Triethanolamine zirconate | 20.08 | 16.06 | 23.2 |
| Water | In an amount to dilute to 378,5 ℓ (100 Gal). | | |

This aqueous size was prepared by adding 94.6 l (25 gallons) of water (deionized) to a main mix tank. The epoxy dispersion was added to this main tank with stirring in a manner not to induce very much air. The PEO-PPO lubricant was added to a premix tank, and 19 l (5 gallons) of water (deionized) at 66° C (150° F) were added with stirring to dissolve the lubricant. An additional 19 l (5 gallons) of water were added to the dissolved lubricant for cooling, and the dissolved lubricant was added to the main mix tank. 56.8 l (15 gallons) of deionized water were added to a premix tank and the A-1100 was added with stirring not to induce too much air. 37.9 l (10 gallons of deionized water were added to a premix tank, and the triethanol amine zirconate was added with stirring so as not to induce too much water. This diluted material was stirred for 5 minutes and transferred to the diluted A-1100 mixture. The combined premix was stirred for 10 minutes and added to the main mix tank. 56.8 l (15 gallons) of dionized water were added to a premix tank, and the polyurethane dispersion was added. The diluted mixture was stirred for 5 minutes and transferred to the main mix tank. The mixture in the main mix tank was diluted to 378.5 l (100 gallons) with water and stirred for 30 minutes. The solids of the size is 8.3 ± 0.2 weight percent, and the pH is around 10.3 ± 0.5. The viscosity is around 2 ± 1 as measured by Brookfield LVT #1 spindle at 30 rpm at 25° C (75° F).

Application of the size to the fibers involves forming the glass fibers in a direct melt forming operation to have fiber diameters of G or K 9-13 microns. The fibers are cooled by pre-size-application sprays of water, and the size is applied to the plurality of fibers by the fibers contacting a roller-type applicator. A plurality of fibers are gathered into one or more strands and fed into a chopping device from the attenuation rollers to produce wet chopped strands. The chopped strands are collected and dried. The conditions of drying include a temperature in the range of 115 to 130° C and a time of around 11 hours. A plurality of the dried, chopped strands having the volatile and moisture-reduced residue of the size have lengths ranging from around 1.59-6.35 mm 1.16 to 1 4 of an inch)but most preferably around 3.18 mm (1 8 of an inch).

These fibers are useful in formulating fiber reinforced polyetherimide such as the Ultem polymers available from General Electric Company, Plastics Group, Pittsfield, Massachusetts. The fibers are combined with the PEI and formed into a ribbon by an extruder and are pelletized. The pellets are useful in injection molding of FRP parts.

## Examples

Table 1 presents 20 formulations of the size utilized in the present invention including the sizes of the alternative embodiment. All of the sizes were prepared in a similar manner as those of the preferred and alternative embodiments. The Rucothane 2011L utilized in formulation 18 is a poly(esterurethane) available from Ruco Chemical Company, New York.

TABLE 1

Examples With Amounts In Weight Percent of Solids

| Components of Size | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|---|---|---|---|---|---|---|---|---|---|
| Epoxy polymer dispersion CMD-35201 Celanese | 45.5 | 45.5 | 49.9 | 43.5 | 49.9 | 58.6 | 39.1 | 44.2 | 44.2 | 50.9 | 47.3 | 45.5 | 45.5 | 45.5 | 45.5 | 45.5 | 59.6 | 39.6 | 59.6 | 45.5 |
| Poly(ester urethane) Rucothane 2011L Baybond XW-110 2 Witco 290H | 11.7 | 11.7 | 12.9 | 11.2 | 12.9 | 15.1 | 10.1 | 11.4 | 11.4 | 13.1 | 12.2 | 11.7 | 11.7 | 11.7 | 11.7 | 11.7 | 15.1 | 34.9 | 15.1 | 11.7 |
| Gamma-aminopropyltriethoxy silane | 15.3 | 15.3 | 9.4 | 21.0 | 24.1 | 11.0 | 18.9 | 8.3 | 21.4 | 9.6 | 15.9 | 15.3 | 15.3 | 15.3 | 15.3 | 15.3 | 20.0 | 20.0 | | 15.3 |
| Glycidoxypropyltrimethoxysilane | | | | | | | | | | | | | | | | | | | 20.0 | |
| Poly(ethylene oxide-propylene oxide) copolymer lubricant UCON 90,000 | 8.4 | 8.4 | 3.7 | 3.2 | 3.7 | 4.3 | 13.0 | 14.7 | 14.7 | 16.9 | 8.7 | 8.4 | 8.4 | 8.4 | 8.4 | 8.4 | | 12.0 | | 6.9 |
| Triethanolamine citanate | 15.3 | 15.3 | 24.1 | 21.0 | 9.4 | 11.0 | 18.9 | 21.4 | 8.3 | 9.6 | 15.9 | 15.3 | | | | | 20.0 | 20.0 | 20.0 | 0 |
| Poly(oxyethylene) VSR 301 | 0.37 | | | | | | | | | | | | | | | | 0.3 | 0.3 | 0.3 | 0.3 |
| Epoxidized polyester RD 1135B | 3.8 | | | | | | | | | | | | | | | | 5.0 | 5.0 | 5.0 | 5.0 |
| Tyzor TE | | | | | | | | | | | | | 15.3 | | 15.3 | | | | | |
| MPD-6212 (Tyzor) 212 | | | | | | | | | | | | | | 15.3 | | 15.3 | | | | 15.3 |
| Solids gm/gal. 3388 gm | 292.9 | 297.9 | 271.4 | 311.4 | 271.4 | 231.4 | 346.4 | 306.4 | 306.4 | 266.4 | 286.4 | 297.9 | 297.9 | 297.9 | 297.9 | 297.9 | | | | |
| Actual Solids (weight %) | 7.7 | 8.3 | 6.9 | 7.4 | 7.2 | 6.4 | 8.4 | 7.8 | 8.1 | 7.3 | 7.8 | 7.64 | 7.94 | 8.13 | | | | | | |

Table 2 presents three illustrative size formulations prepared in a similar manner to that of the preferred embodiments for the listed components of Table 2. These illustrative examples lacked the presence of an organo salt of the oxyacid of titanium and/or zirconium. Also, these examples used a nonionic lubricant different from that of the preferred embodiment.

TABLE 2

| Illustrative Examples (Ill. Eg.) of Sizes in Weight Percent of Solids | | | |
|---|---|---|---|
| Components of Size | Ill. Eg. 1 | Ill. Eg. 2 | Ill. Eg. 3 |
| Epoxy polymer dispersion CMD-35201 Celanese | 74.5 | -- | 59.6 |
| Poly(ester urethane) | | | |
| Rucothane 2011L | -- | 74.5 | -- |
| Baybond XW-110-2 | -- | -- | 14.9 |
| Gamma-aminopropyltriethoxy silane (A 1100 silane) | 20.0 | 20.0 | 20.0 |
| Poly(ethylene oxide-propylene oxide) copolymer lubricant UCON 90,000 | 0 | 0 | 0 |
| Triethanolamine titanate | 0 | 0 | 0 |
| Poly(oxyethylene) WSR-301 | 0.5 | 0.5 | 0.5 |
| Epoxidized polyester RD-1135B | 5.0 | 5.0 | 5.0 |
| Water | --An effective amount for application-- | | |

Most of the size formulations of Tables 1 and 2 were applied to glass fibers in a manner similar to preferred wet chop operation or in a dry chop operation. These chopped sized glass fibers were used as reinforcement for various high temperature matrix polymers to prepare test specimens of FRP composites. These composites were made by injection molding. This involved preparing pellets of reinforcement in matrix polymer and injection molding the pellets.

The pellets were tested for bulk density by a test developed by Dr. Johnson C. Watkins. This test involves weighing a 40 to 50 gram sample of pellets and placing the sample in a 100 ml graduated cylinder. The volume that the sample displaces is recorded as is the weight of the sample. The ratio of weight of the sample divided by the sampling volume equals the bulk density in units of grams per milliliter. The FRP test specimens were tested for tensile strength, percent elongation, flexural strength and modulus, Izods (notched and unnotched) by standard tests known to those skilled in the art. These tests are from the American Society of Testing Materials and respectively are identified as D-638, D-790 and D-256. The Izod impact tests are more fully discussed in the book "Reinforced Plastics Theory and Practice," M. W. Gaylord, 1969, Koppers Company, Inc., Pittsburgh, PA, U.S.A., hereby incorporated by reference.

The results of these tests for molded FRP involving most of the sizes of Table 1 are presented in Table 3. Also shown in Table 3 are control samples that were molded samples prepared from pellets made with commercially available glass fibers. Control 1 utilized commercially available glass fibers having diameters of 13 microns and prepared by a dry chop operation in accordance with U.S. Patent 4,271,229. Control 2 utilized commercially available glass fibers having a diameter of 13 microns by a wet chop (direct chop) operation in accordance with U.S. Patent 4,615,716. Control 3 utilized commercially available glass fibers having diameters of 10 microns sold for reinforcement of PES and polyamide polymers.

In Table 3 the diameter of the glass fibers in Examples 1 through 16 and 18 was 13 microns. In Example 17 the diameter was 10 microns. The molded samples of Examples 1 and 3-11 were made with controls 1 and 3 as one set of experiments. These involved preparation of pellets at 27.2 Kg/h (60 lb/hour) with a number 4 screw at 4,240 rpm. The molded samples of Examples 2 and 12-16 were made along with molded samples with control 2 glass fibers at 22.7 Kg/h (50 lbs/hour), no vacuum and full shot, 1 hole die and No. 4 screw. The molded samples of Examples 17 and 18 involved preparation of pellets at 30 lbs/hour at 200 rpm. The matrix polymer for Examples 1-16 was Ultem PEI available from General Electric Company, Pittsfield, Massachusetts. Other matrix polymers were as indicated.

EP 0 374 593 A1

TABLE 3

| Property of FRP Pellet | 1 | 2 | 4 | 5 | 6 | 7 | 8 | 9 | 10 | 11 | Control 1 | Control 3 | 12 | 13 | 14 | 15 | 16 | Control 2 |
|---|---|---|---|---|---|---|---|---|---|---|---|---|---|---|---|---|---|---|
| Pellet Density lb/ft³ (30% 1/8" glass in pellet) | 35.1 | 36.5 | 37.4 | 35.2 | 35.4 | 34.4 | 35.6 | 32.8 | 34.4 | 33.3 | 31.7 | 31.2 | 39.1 | 40.0 | 37.1 | 38.7 | 40.1 | 39.1 |
| Matrix polymer | | | | | | | | | | PEI | | | | | | | | |
| **Property of Molded FRP** | | | | | | | | | | | | | | | | | | |
| Tensile strength (10³ psi) | 23.6[1] | 23.8 | 23.8 | 23.2 | 22.7 | 23.8 | 22.1 | 23.1 | 22.4 | 23.5 | 23.7 | 22.9 | 23.2 | 23.0 | 23.0 | 23.0 | 23.0 | 20.8 |
| Percent elongation | 3.42[1] | 3.3 | 3.5 | 3.39 | 3.37 | 3.53 | 3.28 | 3.36 | 3.28 | 3.47 | 3.47 | 3.36 | 3.2 | 3.2 | 3.3 | 3.2 | 3.3 | 2.9 |
| Flexural strength (10³ psi) | 29.4[1] | 28.5 | 29.1 | 26.7 | 26.9 | 30.6 | 27.1 | 28.3 | 28.4 | 28.0 | 29.6 | 27.8 | 27.0 | 27.0 | 27.0 | 27.0 | 28.0 | 26.3 |
| Flexural modulus (10⁶ psi) | 1.29[1] | 1.3 | 1.24 | 1.22 | 1.21 | 1.29 | 1.23 | 1.26 | 1.24 | 1.25 | 1.32 | 1.30 | 1.29 | 1.27 | 1.27 | 1.27 | 1.33 | 1.32 |
| Izod (notched) ft lb/in | 1.19[1] | 1.26 | 1.52 | 1.55 | 1.47 | 1.45 | 1.39 | 1.40 | 1.37 | 1.43 | 1.15 | 1.13 | 1.26 | 1.37 | 1.51 | 1.35 | 1.42 | 1.18 |
| Izod (unnotched) | 8.7 | 8.1 | 9.1 | 8.1 | 8.1 | 8.5 | 8.2 | 8.3 | 8.1 | 7.9 | 7.6 | 7.4 | 8.1 | 8.3 | 8.7 | 8.1 | 8.2 | 6.6 |
| Heat deflection temperature (264 psi) °C | 210.5 | 207.4 | 209.9 | | | | | | | | 209.5 | 211.8 | 207.7 | 208.1 | 208.0 | 208.0 | | |
| °F | 410.9 | | 409.8 | | | | | | | | 409.1 | 413.2 | | | | | | |

[1] Average of three samples

T A B L E   3

| Property of FRP Pellet | 17 | 17 | 17 | 18[2] | 18 | 18 | Control 2 | Control 1 | 19 | 20 | Control 1 | Control 3 |
|---|---|---|---|---|---|---|---|---|---|---|---|---|
| Pellet Density lb/ft$^3$ (30% 1/8" glass in pellet) | 35.6 | ---- | --- | --- | --- | --- | | | 31.8 | 33.7 | 29.2 | 29.1 |
| Matrix polymer | PEI | PEEK K Fiber | PES | PEI | PEEK G Fiber | PES | PEI | PEI | PEI | PEI | PEI | PEI |
| **Property of Molded FRP** | | | | | | | | | | | | |
| Tensile strength (10$^3$ psi) | 27.6 | 23.9 | 21.0 | 26.6 | 25.8 | 22.3 | 23.3 | 25.6 | 24.6 | 24.4 | 22.2 | 22.3 |
| Percent elongation | 3.4 | 3.96 | 3.4 | 3.07 | 4.04 | 3.37 | 2.8 | 2.9 | 3.07 | --- | --- | --- |
| Flexural strength (10$^3$ psi) | -- | 35.9 | -- - | | 38.1 | - - | -- | -- | -- | --- | --- | -- |
| Flexural modulus (10$^6$ psi) | --- | 1.4 | -- | -- | 1.48 | -- | -- | -- | -- | --- | -- | -- |
| Izod (notched) ft lb/in | - - | 2.0 | 1.5 | 1.5 | 2.1 | 1.52 | 1.39 | 1.33 | --- | 2.0 | 1.59 | 1.59 |
| Izod (unnotched) | 10.1 | - - | 12.0 | 9.2 | - - | 11.5 | 7.6 | 8.0 | 8.4 | -- | -- | --- |
| Heat deflection temperature (264 psi) °C | -- | - - | - - | -- | --- | -- | -- | -- | --- | --- | -- | -- |
| °F | .... | ... | -- | .... | | - - | -- | -- | - - | --- | --- | --- |

2 - Dry chopped strands

EP 0 374 593 A1

Table 4 presents data on molded samples utilizing glass fiber strands with sizes of the illustrative examples of Table 2, controls and one example similar to example 17 of Table 1.

TABLE 4

| Mechanical Properties of Pellets and Molded Specimens of PEI with 40 Weight Percent Glass Fibers Sized With Illustrative Example Formulations or With Control Glass Fibers | | | | | | |
|---|---|---|---|---|---|---|
| Mechanical Properties | Ill. Eg. 1 | Ill. Eg. 2 | Control 1 | Ill. Eg. 3 | 17b | Control 1 |
| Bulk Density | 32.6 | 25.2 | 25.8 | 33.9 | 35.6 | 30.3 |
| Tensile Strength | 24.5 | 24.6 | 25.8 | 24.7 | 27.6 | 27.4 |
| Izod | 1.58 | 1.54 | 1.4 | 1.39 | 1.73 | 1.36 |
| Percent Glass Wt % | 40 | 40 | 40 | 40 | 40 | 40 |

The pellets and molded specimens for testing from the pellets for the illustrative examples control and 17B were prepared in a manner similar to the preparations used for the pellets and molded specimens of Table 3. In comparing Tables 3 and 4, it is evident that the formulations and sized glass fibers of illustrative examples 1 and 2 are less than satisfactory in mechanical properties to that of the control number 1. Also, the formulation and size fiber of illustrative Example 3 is not acceptable in mechanical properties when compared to the control. The formulation 17B, number 2 from Table 3, number 14 from Table 3 and number 20 from Table 3 and glass fibers sized with these formulations gave good thermal performance as shown by the increased value for bulk density, especially over those of illustrative Examples 1 and 2. Also, these examples give good mechanical properties compared to the control. Also, formulation 14 using the organo zirconate as opposed to the organo titanate of Example 2 from Table 3 gave a slight increase in the Izod impact strength while maintaining the 20 percent improvement in tensile strength over formulation of illustrative Example 3 without either the titanate or zirconate. Also, the color of the molded test bar was not as dark as the molded test bar made with the chopped, sized glass fibers of formulation 2 having the titanate. Also, formulation 20 of Table 3 shows improved fiber forming performance while maintaining the improvements of thermal resistance in the bulk density and the tensile strength previously observed for glass fibers sized with formulations having the organotitanate or zirconate along with the aminosilane coupling agent.

A long term heat aging test was conducted on two samples of PEI matrix polymer reinforced with 30 weight percent glass fibers. One sample was PEI reinforced with sized glass fibers of the preferred embodiment, where the fiber diameter was 13 microns. The second sample was control 3, where the fiber diameter was 9 microns. The long term heat aging test was conducted by testing specimens before heat aging and by placing numerous specimens of both samples of reinforced PEI in an oven at 220°C. Specimens of both samples were withdrawn after 1,000 hours, 2,000 hours and 3,000 hours for tensile strength testing.

TABLE 5

| Property | Preferred Embodiment Sample | | Control 3 | |
|---|---|---|---|---|
| Pellet density before molding | 36.9 | | 34.7 | |
| Heat deflection temp 264 psi | 208.0 | | 207.1 | |
| Izod (unnotched/notched) | 8.4/1.35 | | 7.7/1.17 | |
| Flexural modulas X10$^6$ | 1.37 | | 1.33 | |
| Flexural strength X10$^3$ psi | 28.7 | | 28.8 | |
| Percent elongation | 3.2 | | 3.2 | |
| Tensile strength (x10$^3$ psi) | 23.2 | | 23.8 | |
| Tensile strength (x10$^3$ psi) | | | | |
| | | (%COV)[1] | | (%COV)[1] |
| Tensile strength (x10$^3$ psi) | | | | |
| after 1,000 hours | 15.3 | (14) | 17.4 | (13.5) |
| after 2,000 hours | 18.0 | (4) | 19.0 | (7.1) |
| after 3,000 hours | 13.5 | (4.2) | 7.5 | (8.9) |

[1] % COV is percent coefficient of variation.

Table 5 shows the PEI reinforced with the glass fibers of the preferred embodiment have good retention of tensile strength after long term heat aging and especially after 3,000 hours.

## Claims

1. Inorganic oxide substrates having thereon the residue of an aqueous chemical treating composition comprising:

a. at least one film forming polymer that is essentially free of polyvinylacetate homopolymer and polyacrylic homopolymers and copolymers and present in an effective film forming amount,

b. at least one fiber lubricant in an effective lubricating amount,

c. organofunctional silane coupling agent present in an amount ranging from 0 to an effective coupling agent amount, wherein the amount is zero when the film forming polymer is selected from an epoxy polyurethane copolymer and two film forming polymers, where one is an epoxy-containing polymer and the other is a polyurethane and they are present in a ratio in the range of 6:1 to 1:6.

d. organo alkoxide of a metal selected from the group comprising titanium and zirconium, wherein the salt is present in a range of amounts from greater than 10 parts per 100 parts of the film-forming polymer up to at least an effective coupling agent amount: and

e. a carrier for application of the chemical treatment to the substrate present in an effective application amount.

2. The inorganic oxide substrates of claim 1, wherein the organofunctional silane coupling agent is present and the ratio of amounts of the organo alkoxide of the metal and the organofunctional silane is in the range of 6:1 to 1:6.

3. The organic oxide substrates of claim 2, wherein the ratio of amounts of the organo alkoxide of the metal to the organofunctional silane coupling agent ranges from 2:1 to 1:2.

4. The inorganic oxide substrates of claim 1 wherein at least one organofunctional silane coupling agent is present in the treating composition in an amount in the range of 0.1 to 10 weight percent of the solids of the chemical treating composition.

5. The inorganic oxide substrates of any of claims 1 to 4, wherein the film forming polymer (a) is a polyurethane, the fiber lubricant (b) is essentially free of large amounts of propylene oxide moieties and the organo alkoxide (d) is water compatible and active in water and present in a ratio of amounts with the organosilane in the range of 6:1 to 1:6.

6. The inorganic oxide substrates of claim 5, wherein the treating composition comprises an epoxy functional compound selected from the group comprising copolymer with the diisocyanate monomer;

polyurethane dimer, oligomer, and film-forming polymer in a ratio of amounts ranging grom 10:1 to 1:10 with the polyurethane polymer.

7. The inorganic oxide substrates of claim 6, wherein the epoxy functionality is present in the treating composition as a second film-forming polymer in a ratio of amounts with the polyurethane polymer of 1 to 4.

8. The inorganic oxide substrates of claim 1, wherein one film forming polymer that is an epoxy polymer is present in the treating composition as a liquid, solution, emulsion, dispersion or suspension. another film forming polymer that is a polyurethane film forming polymer selected from the group comprising: polyurethane polymers, poly(ureaurethane) polymers, poly(esterurethane) polymers, poly-(esterurethaneurea) polymers and poly(etherurethane) polymers present in the treating composition as a liquid, solution, emulsion, dispersion or suspension, wherein the ratio of amounts of the epoxy polymer to the polyurethane polymer is in the range of 1:10 to 10:1 and the total amount of the film forming polymer is an effective film forming amount.

9. The inorganic oxide substrates of claim 8, wherein the epoxy polymer is an epoxy polymer dispersion with a weight per epoxide of 500 to 600 and a viscosity of 8,000 to 12,000 mPa·s at 20°C.

10. The inorganic oxide substrates of claim 1, wherein the polyurethane is an oil-in-water dispersion of poly(esterurethane) having little, if any, free isocyanates and having film properties of tensile strength ranging from 3103 x 10⁴ Pa to 4551 x 10⁴ Pa (4,500 to 6,600 psi) and a percentage elongation of 170 percent to 720 percent at break and a modulus at 100 percent elongation ranging from 172 x 10⁴ Pa to 3,585 x 10⁴ Pa (250 psi to 5,200 psi).

11. The inorganic oxide substrates of claim 1, wherein the carrier is water in an amount to produce a viscosity for the aqueous chemical treating composition of less than around 100 mPa x s (100 centipoise) at 20°C and wherein the titanate and/or zirconate are water compatible and active in aqueous solutions.

12. The inorganic oxide substrates of claim 1, wherein the carrier of the treating composition is water and the total film forming amount is in the range of 1 to 25 weight percent of the aqueous chemical treating composition.

13. The inorganic oxide substrates of claim 1, wherein the organo alkoxide of a metal is selected from trialkanolamine titanate and trialkanolamine zirconate where the alkyl group has carbon atoms ranging from 1 to 5.

14. The inorganic oxide substrates of any of claims 1 to 13, wherein the substrates are fibers.

15. The inorganic oxide substrates of claim 14, wherein the fibers are glass fibers having thereon the volatile-reduced residue of the chemical treating composition.

16. The chemically treated glass fibers of claim 15, wherein the aqueous chemical treating composition comprises:

a. one film forming polymer which is an epoxy polymer having an equivalent weight per epoxide in the range of 500 to 600 present in an oil-in-water emulsion,

b. a polyesterpolyurethane film forming polymer present in an oil-in-water dispersion. wherein the total amount of the film forming polymer is in the range of 1 to 25 weight percent of the aqueous chemical treating composition and the ratio of amounts of the epoxy polymer to the polurethane polymer is 4 :1 to 1:4,

c. at least one nonionic fiber lubricant selected from polyethylene oxide-polypropylene oxide copolymers wherein the amount of propylene oxide moieties does not exceed around 80 weight percent of the copolymer and in a viscosity range of 400 to 100 000 mm² s (400 to 100,000 centistokes) at 20°C present in an amount in the range of 1 to 20 weight percent of the nonaqueous components of the aqueous chemical treating composition,

d. an organofunctional silane coupling agent having organic functionality selected from amine, polyamine, epoxy, and ureido functionality wherein the amount of the organofunctional silane coupling agent ranges up to around an effective coupling agent amount,

e. at least one organo alkoxide of a metal selected from the group comprising trialkanolamine titanate and trialkanolamine zirconate including triethanolamine titanate and triethanolamine zirconate,

f. water in an effective amount to give a viscosity for the aqueous chemical treating composition of less than around 100 mPa x s (100 centipoise) at 20°C.

17. The chemically treated glass fibers of claim 16, wherein the aqueous chemical treating composition includes a reaction product obtained by reacting an alkoxylated nitrogen-containing compound including an alkoxylated fatty amine or amide with a polycarboxylic acid and further reacting the resultant product with an epoxide compound present in an amount in the range of 1 to 10 weight percent of the solids of the aqeuous chemical treating compositions and a polyoxyethylene polymer having a molecular weight of around 4 million or more present in an amount of 0.05 to 0.6 weight percent of the aqueous chemical

14

treating composition.

18. The chemically treated glass fibers of claim 15, wherein the fiber lubricant is a nonionic lubricant selected from the group consisting of polyoxyalkylene homopolymers, polyoxyalkylene copolymers including polyethylene oxide-polypropylene oxide copolymers having less than around 80 weight percent of the copolymer comprised of the propylene oxide moiety having viscosities from 400 to 100,000 $mm^2$/s (400 to 100,000 centistokes) at 20°C, paraffinic and microcrystalline waxes, polyethylenes, oxidized polyethylenes, wax esters and glycerol esters and fatty alcohol esters.

19. The chemically treated glass fibers of any of the claims 15 to 18, wherein the glass fibers are in the form of chopped strands comprising a plurality of the fibers.

20. The use of the chemically treated glass fibers of any of claims 15 to 19 in a polymer matrix selected from the group consisting of polyphenylene sulfide, polyetherimide, polyethylene imine, polyacrylates, polyamine, polyethersulfone, polyaromatic ketones including polyetheretherketone, polyetherketone, polyetherketone-ketone and polyketone.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 430 616 (KAO SOAP) <br> * Claims 1,6-7; page 4, lines 12-22; examples 1,4 * | 1-4,13-15,18-20 | C 03 C 25/02 <br> C 08 J 5/08 |
| Y | | 5-8,16-17 | |
| Y | EP-A-0 201 691 (PPG INDUSTRIES) <br> * Claims * | 5-8,16,17 | |
| A | WO-A-8 601 811 (OWENS-CORNING) <br> * Claims * | 1 | |
| A | US-A-3 730 759 (A. MARZOCCHI) <br> * Claims * | 1 | |

|  |  |
|---|---|
|  | TECHNICAL FIELDS SEARCHED (Int. Cl.5) |
|  | C 03 C <br> C 08 J |

The present search report has been drawn up for all claims

| Place of search | Date of completion of the search | Examiner |
|---|---|---|
| THE HAGUE | 06-04-1990 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document